# EUROPEAN PATENT SPECIFICATION

(11) **EP 0 541 145 B1**
(45) Date of publication and mention of the grant of the patent: **06.05.1999**
(21) Application number: 92203167.9
(22) Date of filing: 15.10.1992
(51) Int. Cl.: H04M 3/36, H04M 3/22, H04M 7/00

(54) **Monitoring system for monitoring a telecommunication network containing one or more subscriber exchanges**
Überwachungssystem zur Überwachung eines Telekommunikationsnetzwerks enthaltend eine oder mehrere Teilnehmervermittlungsanlagen
Système de surveillance pour surveiller un réseau de télécommunication comportant un ou plusieurs centraux d'abonné

(30) Priority: 21.10.1991 NL 9101755
(43) Date of publication of application: 12.05.1993
(73) Proprietor: Koninklijke KPN N.V., 9726 AE Groningen (NL)
(72) Inventor: Meijer, Rudolf, NL-1445 PB Purmerend (NL)

(56) References cited:
- WO-A-83/03728
- GB-A- 2 169 476
- PATENT ABSTRACTS OF JAPAN vol. 10, no. 179 (E-414)(2235) 24 June 1986 & JP-A-61 029 249 ( NIPPON TELEGR & TELEPH CORP ) 10 February 1986
- INTERNATIONAL SWITCHING SYMPOSIUM SESSION 13C PAPER 6 21 September 1981, MONTREAL(CA) pages 1 - 7 SINGER M. ET AL 'CALL RECORD JOURNALLING AND POST-PROCESSING FOR SPC-SWITCHING SYSTEM, A VALUABLE TOOL FOR NETWORK MANAGEMENT AND SYSTEM DESIGN'

## Description

### A. BACKGROUND OF THE INVENTION

The invention relates to a monitoring system for monitoring a telecommunication network comprising one or more exchanges, comprising means for generating or importing call records of calls being made by subscribers via such exchange, parameters relevant to such call, such as call destination and call origin, or parameters and variables, such as the answering time, being stored in said call records, at least part of the call records being supplied to a processing unit, reading said call record parameters and classifying them. A monitoring system of this type serves in particular for monitoring the quality of the telecommunication network as it is experienced by the subscribers. This is in contrast with monitoring systems which are aimed more at correct management of the network itself, in order to detect congestion points, to improve routing mechanisms and to prepare for expansions.

Subscriber exchanges in a modern telecommunication network are often SPC (= Stored Programmed Control) exchanges such as, for example, the systems PRX/A, AXE, 5ESS-PRX, and System-12. Switching systems of this type, used as a subscriber exchange, are often equipped with a socalled "traffic observation" function. This function involves the generation, for example by way of random sampling, of call records ('call reports') in a subscriber exchange after the termination of calls made by A-subscribers connected to such a subscriber exchange, in which call records data are reported with respect to the course of the call concerned. These data contain inter alia:
- the number of the A-subscriber;
- the number of the B-subscriber;
- identifications of input and output of the call in the exchange, such as numbers of trunk group and transmitter;
- timing information, for example relating to connection, answering and disconnection;
- codes relating to the result of the call attempt, such as successful, congestion, time-out, signalling fault and the like.
Until now these call reports have been collected for each subscriber exchange during a limited observation time, and processed off-line to produce a quality picture seen from the subscribers' point of view. This observation was initiated either at defined times for the purpose of maintenance at the subscriber exchange concerned and its direct network environment, or after subscriber complaints for the purpose of tracing the causes. Quality pictures thus obtained have, however, been found to be too incidental and often not sufficiently up to date for dealing with complaints adequately, and they showed too little or no correlation with those of other subscriber exchanges in the network environment of the subscriber exchange concerned.

### B. SUMMARY OF THE INVENTION

The invention provides a monitoring system wherein the quality experienced by the subscribers is not, as has been the usual practice until now, monitored off-line and more or less ad hoc, but is monitored on-line and continuously, the possibility being provided of implementing said monitoring for several subscriber exchanges simultaneously, so that a better overview over a whole region as well as increased correlation of the observations can be obtained. In addition, monitored categories ('clusters') can be defined very flexibly.

A monitoring system as indicated above is indeed already known, namely from US 4959849. In this known system, connection calls made in the network may be subjected selectively to 'end-to-end' monitoring by setting a monitoring bit, specifically set aside for this purpose, in a signalling report which accompanies each of said selected calls. In each network element (exchange) along the connection path, the signalling report containing a monitoring bit of this type is copied and transmitted to a central processing unit. By correlation of the successive signalling reports, the progress of the connection set-up associated with such a selected call can be followed. The signalling reports received are kept until all of the connection set-up is complete. If a fault occurs during the connection set-up, the complete history of said set-up up to the time when the fault occurred is therefore available for further analysis. This known monitoring system, however, has the following drawbacks:
- each network element concerned along the route of the call requires a separate data connection to the central processing unit;
- no information is available on whether the take-down has or has not proceeded correctly, on the duration and charging of such a selected connection;
- although, from a technical point of view, not limited to networks having 'common channel' signalling, from an economic point of view the use of this known monitoring system is not attractive in a network without 'common channel' signalling;
- the prior art teaches nothing concerning a possible signalling on the basis of a real-time statistical processing of histories of the most recent selected calls in relation to earlier selected calls which may, or may not, have failed.

A monitoring system, processing call records is known from JP-A-61029249, presenting a communication network control system, comprising data collectors, collecting data from the communication network and transferring them to centers after storage and conversion. The centers send the data collected by the collectors to a data base device directly or via a data transmission network. The device sorts the received data and converts them into a desired form by data processors after conversion of type. These converted data are transmitted. The processors use these data to perform the calculation of the number of equipments and various types of statistic processing for maintain and control of the quality of a communication network. The aim of the present invention, in view of the prior art, is the ability to monitor selected network areas (" network spotting"), by means of (online) clustering of call record parameters into monitor classes. By said parameter clustering, network watchmen are able to zoom in in certain network areas, viz. by setting parameters referring to such network area to be investigated.

Said monitoring classes may, for example, be formed by clustering the destination indications ('B-numbers') read out from the call records, or by clustering the origin indications ('A-numbers') read out. It is also possible to form monitoring classes ('clusters') from combinations of the two, it being possible, therefore, to have a cluster formed by a particular A-number range (e.g. 070-3320000..070-334999) combined with a particular B-number range (e.g. 06-000..06-999). The monitoring classes may be defined a priori (such as 'A=070-332..-334 in combination with B=06'), or may be produced from the call records observed (for example clustering per first four digits of the B-number). If so wished, other possible parameters or parameter combinations may be used to define the monitored clusters.

In more detail, provision is preferably made that said statistical value is calculated over a fixed number p of call records which have been classified most recently in the relevant monitoring class. In this context it is possible for the statistical value to be recalculated as soon as, after the latest calculation, again, p call records have been classified in that monitoring class ('jumping window'), or that the statistical value is recalculated always as soon as another call record is classified in that monitoring class ('moving window'). It is also possible that for each monitoring class the time is calculated between the call records successively classified therein and that said statistical value is corrected in such a way that the difference between the statistical value thus corrected and the said threshold value increases as the elapsed time between the call records classified in the monitoring class is the greater ('leaky bucket' and the like).

### C. REFERENCES

JP-A-61029249

### D. EXEMPLARY EMBODIMENTS

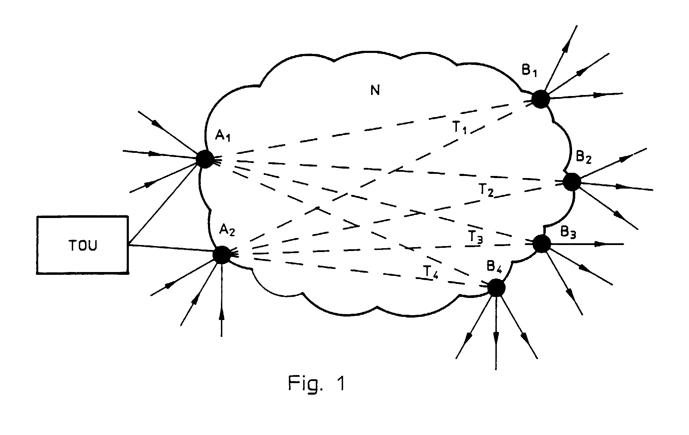

Figure 1 shows a telecommunication network N of which a number of subscriber exchanges A1, A2, B1, B2, B3, B4 form part. It is assumed that calls are generated by subscribers ('A-subscribers') connected to the exchanges Al, A2 which have, as their destination, subscribers ('B-subscribers') connected to the exchanges B1..B4. It is to be noted that, in the following, the term 'destination' refers not only to the final destination of a subscriber, but also to 'intermediate destinations'. It will be obvious that, in practice, calls are not only generated on the part of the 'A-exchanges' but also on the part of the 'B-exchanges'. The exchanges Al and A2 are connected to a 'traffic observation unit' TOU which monitors the calls of the A-subscribers with regard to quality by reading in and analysing the 'call records' generated in said A-exchanges. Since this is a matter of an average quality picture, not all the calls are monitored separately - which would require enormous additional processing capacity - but always a statistically relevant set thereof. It is also possible, in most SPC exchanges, to collect call reports by way of random sampling. Because the network N does not behave homogenously, in terms of the subscriber traffic in the various directions, the traffic flows T1, T2, T3, T4 to the various destinations, represented by B1..B4, are separately monitored by the TOU. T1..T4 may also be traffic flows going to more than one exchange, or traffic flows having, on the other hand, a more restricted destination class than corresponds to the domain of a B exchange.

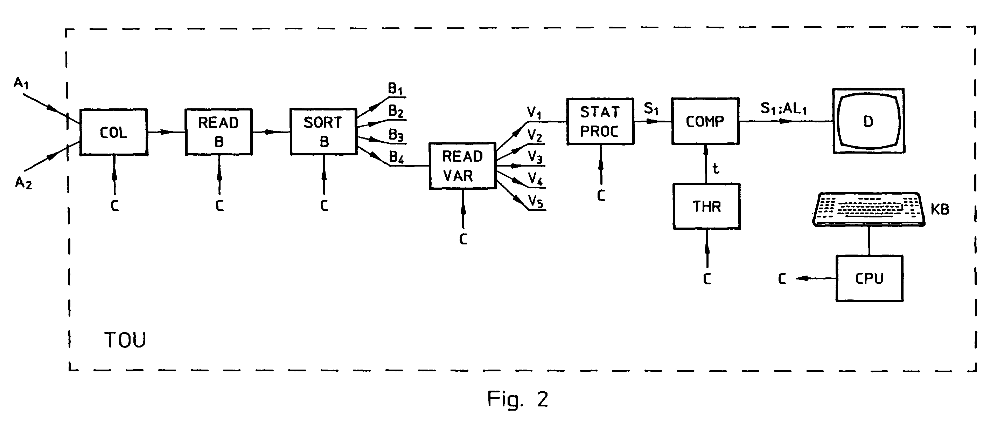

To measure the quality it is possible, for example, to detect the average number of calls which does not lead to a connection with the selected B-subscriber, for various reasons (signalled by signalling codes 'BUSY', 'TIME-OUT', 'INTERNAL CONGESTION', 'EXTERNAL CONGESTION', 'TECHNICAL FAULT' and the like). If the number of failed connections exceeds a particular percentage, this may give rise to an alarm signal (error message). Also of importance with regard to quality measurement are response times, such as the answering time, ie. the time between the start of the A-call and the B-subscriber answering said call ('ANSWER'). Similarly, the time between the start of the call and the termination of the call by the A-subscriber or by the B-subscriber ('A-RELEASE' or 'B-RELEASE') may be of importance. The method and the means by which the quality can thus be monitored are illustrated in Figure 2.

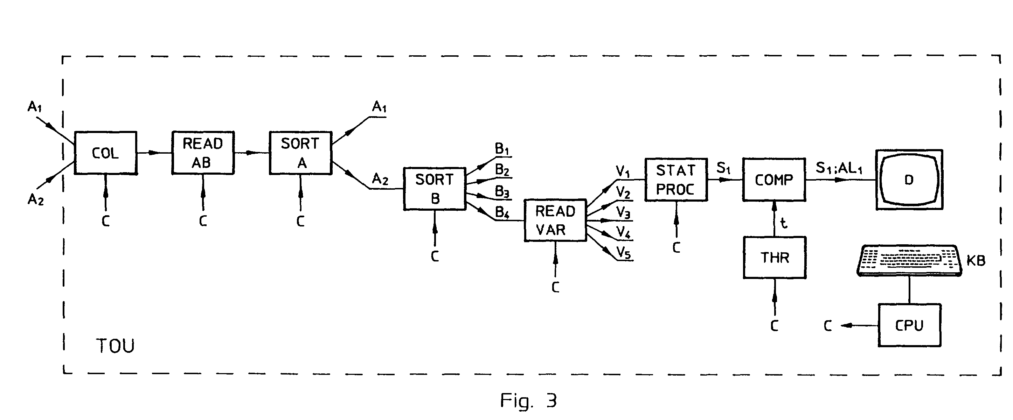

Figure 2 shows an exemplary embodiment of a TOU. In the exchanges Al and A2, call records are collected by random sampling, and supplied to a collecting unit COL where they are, inter alia, screened for completeness. In the specific case that the A-exchanges produce call records having different formats, said call records are also converted in the COL unit into the same format, suitable for processing in the subsequent units of the TOU. From the thus uniformly formatted call records, the call destination is read out in the reading unit READ_B, after which the call records, on the basis of the destinations read out, are classified by the sorting unit SORT_B into destination classes. As already noted earlier, said destination classes may correspond to the various B-exchanges, or a completely different classification may be chosen. For example, all those calls may be clustered which start with the call number 06, or all the calls which start with 070-33. In these cases, therefore, one of the traffic flows T1..T4 to be monitored has the destination 06 (which may be several 06-exchanges) or 070-33 (the PABX of the main office of PTT Nederland NV). In Figure 3, discussed in more detail hereinafter, it is also shown in which way traffic flows to be monitored may additionally be clustered according to a second parameter, namely their origin.

It is to be noted that the various units of the TOU are preferably implemented as software units ('functions') in a computer system and need not, in general, be separate, dedicated hardware units. The various units are under the control of a central processing unit CPU which may be operated via a keyboard KB. The sets of call records thus formed in the SORT_B unit, which have the same destination Bn for each set, are subsequently read, for each set, in a reading unit READ_VAR, where the different variables relevant for quality monitoring of said call records are read in, such as the values of the already mentioned variables 'BUSY', 'TIME-OUT', ANSWER, etc., indicated in the figure by V1..V5. For each variable V1..V5, a statistical process is executed in a unit STAT_PROC. The various statistical processes can be executed simultaneously or time-distributed. For example, a statistical process is executed for the variable ANSWER (V1), such as the calculation of the average value calculated between the start of the call and the answer thereto, over, in each case, the latest 150 call records ('MOVING WINDOW') having destination B4. Said average value, indicated by the value S1, is then compared with a threshold value t which has been established in a threshold value unit THR. So long as the value of S1 does not exceed a particular number of seconds t, the value S1 is passed directly to a display unit D, where the other relevant values Sn are also shown. As soon as the average ANSWER time S1 exceeds the number t seconds, however, an alarm signal All is passed to the display unit D along with said value S1, as a result of which the value of S1 is shown there in a particular way, for example underlined, bold or flashing; in addition, for example, a sound signal ('beep') may be produced. A statistical value is also calculated of the remaining variables, which value is then compared with a maximum or minimum threshold value t and which is then, depending on the result of the comparison, shown on the display D with or without an alarm indication ALn. The display D is continuously monitored by a network operator who can take steps if quality deteriorates, while being supported by all the up to date values of all relevant variables. It is to be noted that the different variables may, if required, undergo different statistical processing operations. As already mentioned, it is therefore possible to calculate an average value in each case over the latest n call records, but also their standard deviation. It is also possible not to calculate the statistical values over in each case the latest n call records but to calculate in each case over the latest n call records as soon as that number is reached again after the latest calculation ('JUMPING WINDOW'). In the case of statistical processing of binary variables, such as 'BUSY' (which may have the value 'busy' or 'not_busy') it may be useful to take account of the time which has elapsed between two successive 'busy' messages. This may, for example, be achieved by means of a 'leaky_bucket' algorithm which is used, inter alia, in 'policing' units in ATM (Asynchronous Transfer Mode) systems, as known from the European Patent Application EP0381275 in the name of the applicant, in which a method is indicated for time-shared use of such a policing unit for a large number of channels.

It is to be noted that, as the B exchanges shown in Figure 1 obviously generally also serve as A-exchanges for the purpose of passing calls from the subscribers connected thereto, said exchanges may also be connected to one or more TOUs which then take care of the monitoring of the quality experienced by said subscribers. If, in the exchanges, call records are also produced of INCOMING calls (i.e. generated by A-subscribers not connected to said exchange), it is in addition also possible to monitor the quality of said received calls in the same way as indicated above for outgoing calls. It is also to be noted that call records - for example via the signalling network - may also be imported from another exchange, instead of being generated in the exchange in question itself.

Figure 3 corresponds to Figure 2, but in this exemplary embodiment the read-out unit READ_B has been replaced by a read-out unit READ_AB in which, in addition to the destination, the origin of the calls is also read out. This exemplary embodiment further comprises a sorting unit SORT_A. In this unit SORT_A the call records are classified according to their origin indication into origin categories. In this figure, said categories are indicated by the designations Al, A2. It is, however, stated emphatically that, just as the destination categories need not correspond to the exchanges B1..4, neither do the origin categories need to correspond to the exchanges A1..A2. It is thus possible that the call records are classified into more categories than the number of A-exchanges to which the TOU is connected. For example, A-numbers which are connected to computer systems may form a special number series which can be monitored separately (similarly, special B-number series of this type may form separate B-categories which are classified by the SORT_B unit into separate classes). In this exemplary embodiment a first category classification, according to origin, therefore takes place by means of the SORT_A unit, and a second category classification, according to destination, by means of the SORT_B unit. Both categories may be completely independent of the management domains of the A- and B-exchanges, respectively. These flexible category classifications, which may be initiated by means of the keyboard KB via the central control CPU, makes it possible that a TOU need not in fact be connected to a subscriber exchange A1..A2 or B1..B4, respectively, but may as readily be connected to a switching or transit exchange, somewhere in the network N, between the subscriber exchanges A1..A2 and B1..B4. However, call records should be generated in said exchanges of the calls passing through (connections from An to Bn and vice versa), or be imported from other exchanges, for example subscriber exchanges. In principle it would even be sufficient to have just one TOU for the whole network N, with the ability to monitor the quality, in a continuous process, of the various subscriber traffic flows T1..T4, clustered into various subscriber clusters (according to destination and/or origin, to be initiated by the network manager).

## Claims

1. Monitoring system for monitoring a telecommunication network comprising one or more exchanges, comprising means for generating or importing call records of calls being made by subscribers via such exchange, parameters relevant to such call, such as call destination and call origin, or parameters and variables, such as the answering time, being stored in said call records, at least part of the call records being supplied to a processing unit, adapted for reading said call record parameters and processing them, characterised in that said processing unit comprises means for inputting selection parameters, as well as means for selecting, from said call records only call records which correspond to said selection parameters, said processing unit being adapted, moreover, for reading out remaining parameters or variables from said selected call records and for calculating a statistical value, and comparing that statistical value with a threshold value and outputting a message in the case of an excessive discrepancy between said statistical value and the threshold value.

2. Monitoring system according to Claim 1, characterised in that said statistical value is calculated over a fixed number p of the most recently selected call records .

3. Monitoring system according to Claim 2, characterised in that the statistical value is always recalculated as soon as, after the latest calculation, the number of p call records have been selected .

4. Monitoring system according to Claim 2, characterised in that the statistical value is always recalculated as soon as another call record is selected .

5. Monitoring system according to Claim 1, characterised in that the time is calculated between the call records successively selected therein and that said statistical value is corrected in such a way that the difference between the statistical value thus corrected and the said threshold value increases as the elapsed time between the selected call records is the greater.

6. Monitoring system according to Claim 1, characterised in that the the call record are selected according to their call destinations .

7. Monitoring system according to Claim 1 or 6, characterised in that the call records are selected according to their call origins .

## Patentansprüche

1. Überwachungssystem zum Überwachen eines Telekommunikationsnetzwerkes mit einer oder mehreren Vermittlungsstellen, mit Mitteln zum Erzeugen oder zum Importieren von Anrufseinträgen von Anrufen, die von Teilnehmern über solche Vermittlungsstellen durchgeführt worden sind, wobei die für solch einen Anruf relevanten Parameter wie Anrufsziel und Anrufsausgangspunkt, oder Parameter und Variable wie die Antwortzeit, in den besagten Anrufseinträgen gespeichert werden, wobei zumindest ein Teil der Anrufseinträge einer Prozessoreinheit zugeführt werden, die geeignet ist, die besagten Anrufseintragparameter zu lesen und zu bearbeiten, dadurch gekennzeichnet, dass die Prozessoreinheit Mittel umfasst, um Auswahlparameter einzugeben, dass die Prozessoreinheit ferner Mittel umfasst, um aus den besagten Anrufen nur diejenigen Anrufe auszuwählen, die den besagten Auswahlparametern genügen, wobei die Prozessoreinheit geeignet ist, verbleibende Parameter oder Variable aus den ausgewählten Anrufseinträgen auszulesen und einen statistischen Wert zu berechnen und diesen statistischen Wert mit einem Schwellwert zu vergleichen und eine Nachricht auszugeben, falls ein exzessiver Unterschied zwischen diesem statistischen Wert und dem Schwellwert besteht.

2. Überwachungssystem nach Anspruch 1, dadurch gekennzeichnet, dass der besagte statistische Wert über eine feste Anzahl p der kürzlichst ausgewählten Anrufseinträge berechnet wird.

3. Überwachungssystem nach Anspruch 2, dadurch gekennzeichnet, dass der statistische Wert sofort dann neu berechnet wird, wenn nach der letzten Berechnung die feste Anzahl p von Anrufseinträgen ausgewählt worden sind.

4. Überwachungssystem nach Anspruch 2, dadurch gekennzeichnet, dass der statistische Wert sofort dann neu berechnet wird, wenn ein weiterer Anruf ausgewählt worden ist.

5. Überwachungssystem nach Anspruch 1, dadurch gekennzeichnet, dass die Zeit berechnet wird, die zwischen nacheinander ausgewählten Anrufseinträgen abläuft, und dass der statistische Wert in solch einer Weise korrigiert wird, dass die Differenz zwischen dem so korrigierten statistischen Wert und dem besagten Schwellwert je mehr ansteigt, desto grösser die abgelaufene Zeit zwischen den ausgewählten Anrufseinträgen wird.

6. Überwachungssystem nach Anspruch 1, dadurch gekennzeichnet, dass die Anrufseinträge gemäss ihren Anrufszielen ausgewählt werden.

7. Überwachungssystem nach Anspruch 1 oder Anspruch 6, dadurch gekennzeichnet, dass die Anrufseinträge gemäss ihren Anrufsausgangspunkten ausgewählt werden.

## Revendications

1. Système de surveillance destiné à surveiller un réseau de télécommunications comprenant un ou plusieurs centraux, comprenant un moyen destiné à engendrer ou importer des enregistrements d'appels pour des appels qui sont réalisés par des abonnés par l'intermédiaire d'un tel central, des paramètres se rapportant à un tel appel, tels que la destination de l'appel et l'origine de l'appel, ou bien des paramètres et des variables, tels que le temps de réponse, étant mémorisés dans lesdits enregistrements d'appels, au moins une partie des enregistrements d'appels étant appliqués à une unité de traitement, conçue pour lire lesdits paramètres d'enregistrements d'appels et les traiter, caractérisé en ce que ladite unité de traitement comprend un moyen permettant de saisir en entrée des paramètres de sélection, de même qu'un moyen permettant de sélectionner, à partir desdits enregistrements d'appels, uniquement les enregistrements d'appels qui correspondent auxdits paramètres de sélection, ladite unité de traitement étant conçue, en outre, pour lire des paramètres ou des variables restants à partir desdits enregistrements d'appels sélectionnés et pour calculer une valeur statistique, et comparer cette valeur statistique à une valeur de seuil ainsi que fournir en sortie un message dans le cas d'une discordance excessive entre ladite valeur statistique et la valeur de seuil.

2. Système de surveillance selon la revendication 1, caractérisé en ce que ladite valeur statistique est calculée sur un nombre fixé p des enregistrements d'appels sélectionnés le plus récemment.

3. Système de surveillance selon la revendication 2, caractérisé en ce que la valeur statistique est en permanence recalculée dès que, après le calcul le plus récent, un nombre p d'enregistrements d'appels a été sélectionné.

4. Système de surveillance selon la revendication 2, caractérisé en ce que la valeur statistique est recalculée en permanence dès qu'un autre enregistrement d'appel est sélectionné.

5. Système de surveillance selon la revendication 1, caractérisé en ce que la durée est calculée entre les enregistrements d'appels successivement sélectionnés dans celui-ci, et en ce que ladite valeur statistique est corrigée de telle manière que la différence entre la valeur statistique ainsi corrigée et ladite valeur de seuil augmente à mesure qu'augmente la durée écoulée entre les enregistrements d'appels sélectionnés.

6. Système de surveillance selon la revendication 1, caractérisé en ce que les enregistrements d'appels sont sélectionnés en fonction de leurs destinations d'appels.

7. Système de surveillance selon la revendication 1 ou 6, caractérisé en ce que les enregistrements d'appel sont sélectionnés en fonction de leurs origines d'appels.
